# EUROPEAN PATENT APPLICATION

(11) **EP 4 753 134 A1**
(43) Date of publication of application: **03.06.2026**
(21) Application number: 24867005.1
(22) Date of filing: 03.07.2024
(51) Int. Cl.: H02M 3/335

(54) **POWER CONVERSION APPARATUS AND CONTROL MODULE**

(30) Priority: 21.09.2023 CN 202311232117
(71) Applicant: Huawei Digital Power Technologies Co., Ltd., Shenzhen, Guangdong 518043 (CN)
(72) Inventor: NIE, Yanlin, Shenzhen, Guangdong 518043 (CN); LI, Shanshan, Shenzhen, Guangdong 518043 (CN); PENG, Xingqiang, Shenzhen, Guangdong 518043 (CN); DONG, Shaoqing, Shenzhen, Guangdong 518043 (CN)
(74) Representative: Gill Jennings & Every LLP
(86) International application number: PCT/CN2024/103262
(87) International publication number: WO 2025/060586

(57) **Abstract**

This application provides a power conversion apparatus and a control module. The power conversion apparatus includes: a DC/DC conversion circuit and a control module. The DC/DC conversion circuit includes an inverter circuit, a resonance unit, and a rectifier circuit. The inverter circuit includes a plurality of bridge arms, and each bridge arm includes a plurality of switching transistors. The control module is configured to: after controlling the plurality of switching transistors to operate for first duration by using a first frequency as a switching frequency, control the switching frequency to switch to a second frequency; and control the plurality of switching transistors to operate for second duration by using the second frequency as the switching frequency. The first frequency is higher than the second frequency, and the first duration is shorter than the second duration. In this application, the switching transistor operates for short duration at a high switching frequency, and operates for long duration at a low switching frequency, so that an excessively rapid change or an excessively slow change in an output voltage can be avoided, and flexibility and stability of using the power conversion apparatus can be improved.

## Description

This application claims priority to Chinese Patent Application No. 202311232117.8, filed with the China National Intellectual Property Administration on September 21, 2023, and entitled "POWER CONVERSION APPARATUS AND CONTROL MODULE", which is incorporated herein by reference in its entirety.

### TECHNICAL FIELD

This application relates to the circuit field, and more specifically, to a power conversion apparatus and a control module.

### BACKGROUND

An output voltage gain (Gain) of a power conversion circuit changes with a switching frequency f of a switching transistor in the power conversion circuit. When the switching frequency of the switching transistor is lower than a resonance frequency of a resonance circuit in the power conversion circuit, an absolute value of ΔGain/Δf gradually increases with a decrease in the switching frequency, and an increasing speed is increasingly fast; or when the switching frequency is higher than a resonance frequency, an absolute value of ΔGain/Δf gradually decreases with an increase in the switching frequency, and the absolute value of ΔGain/Δf tends to be stable. As a result, when the switching frequency is high, switching of the switching frequency may cause a rapid increase or decrease in the output voltage, and a large ripple is generated; or when the switching frequency is low, switching of the switching frequency may cause a slow change in the output voltage, and the change in the output voltage exceeds designed response time.

How to improve linearity between the output voltage and time during the switching of the switching frequency becomes an urgent problem to be resolved.

### SUMMARY

This application provides a power conversion apparatus and a control module. A switching transistor is controlled to operate for short duration at a high switching frequency, and to operate for long duration at a low switching frequency, to improve linearity between an output voltage and time, avoid an excessively rapid change or an excessively slow change in the output voltage, and improve flexibility and stability of using the power conversion apparatus.

According to a first aspect, a power conversion apparatus is provided, where the power conversion apparatus includes: a DC/DC conversion circuit and a control module. The DC/DC conversion circuit includes an inverter circuit, a resonance unit, and a rectifier circuit. The inverter circuit includes a plurality of bridge arms, and each bridge arm includes a plurality of switching transistors. The inverter circuit is configured to operate at a switching frequency by using the plurality of switching transistors, so that a direct current input to the DC/DC conversion circuit is converted into an alternating current. The resonance unit is configured to perform voltage conversion on the alternating current converted by the inverter circuit. The rectifier circuit is configured to convert the alternating current on which the resonance unit performs the voltage conversion into a direct current. The control module is configured to: after controlling the plurality of switching transistors to operate for first duration by using a first frequency as the switching frequency, control the switching frequency to switch to a second frequency; and control the plurality of switching transistors to operate for second duration by using the second frequency as the switching frequency. The first frequency is higher than the second frequency, and the first duration is shorter than the second duration.

An output voltage gain (Gain) of the power conversion circuit changes with the switching frequency f of the switching transistor in the power conversion circuit. When the switching frequency of the switching transistor is lower than a resonance frequency of a resonance circuit in the power conversion circuit, an absolute value of ΔGain/Δf gradually increases with a decrease in the switching frequency, and an increasing speed is increasingly fast; or when the switching frequency is higher than a resonance frequency, an absolute value of ΔGain/Δf gradually decreases with an increase in the switching frequency, and the absolute value of ΔGain/Δf tends to be stable.

In this application, during switching of the switching frequency, time in which the switching frequency operates is controlled, so that the switching transistor operates for short duration at a high switching frequency, and operates for long duration at a low switching frequency. This improves linearity between the output voltage and time, avoids an excessively rapid change or an excessively slow change in the output voltage, and improves flexibility and stability of using the power conversion apparatus.

It should be noted that in this embodiment of this application, the first duration is total duration of the first frequency, that is, from time when a specific frequency is switched to the first frequency to time when the first frequency is switched to the second frequency; and the second duration is total duration of the second frequency, that is, after the switching frequency is controlled to maintain the second frequency for the second duration, the second frequency is switched to a third frequency.

With reference to the first aspect, in some implementations of the first aspect, the control module includes: a frequency control unit, a duration control unit, and a signal generation unit. The frequency control unit is configured to send a second control code to the duration control unit, where the second control code indicates the second frequency. The duration control unit is configured to: obtain the second duration based on the second control code, and output the second duration to the frequency control unit. The frequency control unit is further configured to continuously output the second control code to the signal generation unit in the second duration. The signal generation unit is configured to: in response to the second control code, control a switching frequency of the plurality of switching transistors to switch from the first frequency to the second frequency, and enable the plurality of switching transistors to operate at the second frequency for the second duration.

In this embodiment of this application, there is a correspondence between a control code, a frequency, and duration. Based on the correspondence, the DC/DC conversion circuit can be controlled to operate at a specific frequency for corresponding time, so that the DC/DC conversion circuit is controllable, and reliability of a device including the DC/DC conversion circuit is improved.

With reference to the first aspect, in some implementations of the first aspect, the control module includes: a frequency control unit and a signal generation unit. The frequency control unit is configured to send a second control code to the signal generation unit, where the second control code indicates the second frequency. The signal generation unit is configured to: obtain the second duration based on the second control code, control a switching frequency of the plurality of switching transistors to switch from the first frequency to the second frequency, and enable the plurality of switching transistors to operate at the second frequency for the second duration.

In this embodiment of this application, the signal generation unit may obtain the second duration corresponding to the second control code. In a possible implementation, the signal generation unit includes the duration control unit in the foregoing solutions, and the duration control unit obtains the second duration. In a possible implementation, the signal generation unit stores a correspondence between a control code and duration, the signal generation unit directly determines a second control code correspondence based on the correspondence, the signal generation unit further includes a timer, the timer is started when the timer controls the switching frequency of the plurality of switching transistors to switch from the first frequency to the second frequency, and the signal generation unit controls the switching frequency of the plurality of switching transistors to switch to another frequency when duration of the timer is the second duration.

In this embodiment of this application, the correspondence between the frequency and the duration can be implemented, so that the DC/DC conversion circuit can operate at a specific frequency for corresponding time, and the DC/DC conversion circuit is controllable. This improves reliability of a device including the DC/DC conversion circuit.

With reference to the first aspect, in some implementations of the first aspect, a quantity of bits of the second control code is two, and the duration control unit includes: a first NOT gate, a second NOT gate, an AND gate, a first NAND gate, a second NAND gate, a third NAND gate, and the flip-flop. An input end of the first NOT gate inputs a first bit of the second control code, and an output end of the first NOT gate is connected to an input end of the second NOT gate and a first input end of the AND gate; an output end of the second NOT gate is connected to a first input end of the first NAND gate; a second input end of the first NAND gate is connected to a clock signal, and an output end of the first NAND gate is connected to a first input end of the second NAND gate; a second input end of the AND gate inputs a second bit of the second control code, and an output end of the AND gate is connected to a first input end of the third NAND gate; a second input end of the third NAND gate is connected to an output end of the flip-flop, and an output end of the third NAND gate is connected to a second input end of the second NAND gate; an input end of the flip-flop inputs the clock signal; and an output end of the second NAND gate is connected to the frequency control unit, and duration in which the second NAND gate outputs a high level in a cycle is the second duration.

The duration control unit may obtain the second duration based on the second control code, and in the duration control unit, a value of the second control code may be changed to change the output second duration, so that different frequencies can correspond to different duration. This improves flexibility of the DC/DC conversion circuit.

With reference to the first aspect, in some implementations of the first aspect, the first frequency corresponds to a first control code, the second frequency corresponds to the second control code, the first control code corresponds to the first duration, and the second control code corresponds to the second duration.

The control code is used, so that the correspondence between the frequency and the duration can be established, to facilitate control over the DC/DC conversion circuit.

With reference to the first aspect, in some implementations of the first aspect, the control module is further configured to receive a frequency adjustment signal, where the frequency adjustment signal includes the second frequency.

The frequency adjustment signal indicates that a target frequency to be switched is the second frequency, so that scheduling of the DC/DC conversion circuit can be implemented, and the DC/DC conversion circuit can cooperate with another circuit. This improves efficiency.

With reference to the first aspect, in some implementations of the first aspect, the control module includes a detection unit, where the detection unit is configured to detect an electrical parameter of the DC/DC conversion circuit; and the control module determines the second frequency based on the electrical parameter.

The second frequency is determined based on the real-time electrical parameter of the DC/DC conversion circuit, so that a change in the DC/DC conversion circuit can meet a current requirement, and reliability of the DC/DC conversion circuit is improved.

With reference to the first aspect, in some implementations of the first aspect, the electrical parameter includes at least one of the following: an input current of the DC/DC conversion circuit, an input voltage of the DC/DC conversion circuit, an output current of the DC/DC conversion circuit, and an output voltage of the DC/DC conversion circuit.

The switching frequency of the switching transistor is adjusted based on input and output of the DC/DC conversion circuit, to implement closed-loop control over the DC/DC conversion circuit and improve stability of the DC/DC conversion circuit.

With reference to the first aspect, in some implementations of the first aspect, the first duration is 1/2ⁿ⁻¹ of the second duration, and n is a quantity of bits of a control code output by the frequency control unit.

With reference to the first aspect, in some implementations of the first aspect, the control module includes n-1 flip-flops, and n is a quantity of bits of the control code output by the frequency control unit.

With reference to the first aspect, in some implementations of the first aspect, the signal generation unit includes a variable oscillator.

According to a second aspect, a control module is provided, configured to be connected to a DC/DC conversion circuit, where the DC/DC conversion circuit includes an inverter circuit, a resonance unit, and a rectifier circuit, the inverter circuit includes a plurality of bridge arms, each bridge arm includes a plurality of switching transistors, and the control module includes: a frequency control unit, a duration control unit, and a signal generation unit. The frequency control unit is configured to output a second control code to the duration control unit and the signal generation unit after keeping outputting a first control code to the signal generation unit for first duration, where the first control code corresponds to a first frequency, and the second control code corresponds to a second frequency. The duration control unit is configured to in response to the second control code, control duration in which the frequency control unit outputs the second control code to the signal generation unit to be second duration. The signal generation unit is configured to: in response to the second control code, control a switching frequency of the switching transistor to switch from the first frequency to the second frequency, and enable the switching transistor to operate at the second frequency for the second duration. The first frequency is higher than the second frequency, and the first duration is shorter than the second duration.

With reference to the second aspect, in some implementations of the second aspect, the first duration is 1/2ⁿ⁻¹ of the second duration, and n is a quantity of bits of the second control code output by the frequency control unit.

With reference to the second aspect, in some implementations of the second aspect, a quantity of bits of the second control code is two, and the duration control unit includes: a first NOT gate, a second NOT gate, an AND gate, a first NAND gate, a second NAND gate, a third NAND gate, and the flip-flop. An input end of the first NOT gate inputs a first bit of the second control code, and an output end of the first NOT gate is connected to an input end of the second NOT gate and a first input end of the AND gate; an output end of the second NOT gate is connected to a first input end of the first NAND gate; a second input end of the first NAND gate is connected to a clock signal, and an output end of the first NAND gate is connected to a first input end of the second NAND gate; a second input end of the AND gate inputs a second bit of the second control code, and an output end of the AND gate is connected to a first input end of the third NAND gate; a second input end of the third NAND gate is connected to an output end of the flip-flop, and an output end of the third NAND gate is connected to a second input end of the second NAND gate; an input end of the flip-flop inputs the clock signal; and an output end of the second NAND gate is connected to the frequency control unit, and duration in which the second NAND gate outputs a high level in a cycle is the second duration.

With reference to the second aspect, in some implementations of the second aspect, the duration control unit includes n-1 flip-flops, and n is the quantity of bits of the second control code output by the frequency control unit.

With reference to the second aspect, in some implementations of the second aspect, the control module is further configured to receive a frequency adjustment signal, where the frequency adjustment signal includes the second frequency.

With reference to the second aspect, in some implementations of the second aspect, the control module includes a detection unit, where the detection unit is configured to detect an electrical parameter of the DC/DC conversion circuit; and the control module determines the second frequency based on the electrical parameter.

With reference to the second aspect, in some implementations of the second aspect, the electrical parameter includes at least one of the following: an input current of the DC/DC conversion circuit, an input voltage of the DC/DC conversion circuit, an output current of the DC/DC conversion circuit, and an output voltage of the DC/DC conversion circuit.

With reference to the second aspect, in some implementations of the second aspect, the signal generation unit includes a variable oscillator.

According to a third aspect, a power conversion method is provided, and is applied to an apparatus including a power conversion circuit. The method includes: determining a drive signal, where the drive signal is used to control a switching frequency of a switching transistor in the power conversion circuit to switch from a first frequency to a second frequency; and controlling, in second duration, the switching frequency of the switching transistor to be the second frequency to output a voltage, where duration in which the first frequency acts on the switching transistor meets first duration, the first duration is determined based on the first frequency, and the second duration is determined based on a target frequency.

If the first frequency is higher than the second frequency, the first duration is shorter than the second duration; or if the first frequency is lower than the second frequency, the first duration is longer than the second duration.

According to a fourth aspect, a power supply device is provided, where the power supply device includes: a housing, a circuit board disposed in the housing, and a power conversion apparatus disposed on the circuit board, and the power conversion apparatus includes the power conversion apparatus according to any one of the first aspect and the possible implementations of the first aspect.

With reference to the fourth aspect, in some implementations of the fourth aspect, the power supply device further includes an input terminal, an output terminal, and a cooling system. The input terminal is connected to an input port of the power conversion apparatus, and is configured to receive electric energy from a power supply; the output terminal is connected to an output port of the power conversion apparatus, and is configured to transfer converted electric energy to a load, to supply power to the load; and the cooling system is configured to cool the power supply device.

The cooling system improves safety and a service life of the power supply device.

For beneficial effects of the second aspect to the fourth aspect, refer to the descriptions in the first aspect. Details are not described herein again.

### BRIEF DESCRIPTION OF DRAWINGS

FIG. 1 is a diagram of an application scenario according to an embodiment of this application;
FIG. 2 is a schematic of a structure of a current full-bridge LLC power conversion circuit;
FIG. 3 is a diagram of a structure of a first power conversion apparatus according to an embodiment of this application;
FIG. 4 is a diagram of a relationship between a frequency and time according to an embodiment of this application;
FIG. 5 is a diagram of a structure of a second power conversion apparatus according to an embodiment of this application;
FIG. 6 is a diagram of a structure of a control module according to an embodiment of this application;
FIG. 7 is a diagram of a structure of a control module according to an embodiment of this application;
FIG. 8 is a diagram of a structure of a digital circuit of a duration control unit according to an embodiment of this application;
FIG. 9 is a sequence diagram of a duration control unit according to an embodiment of this application; and
FIG. 10 shows a power conversion method according to an embodiment of this application.

### DESCRIPTION OF EMBODIMENTS

The following describes technical solutions of this application with reference to accompanying drawings.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized.

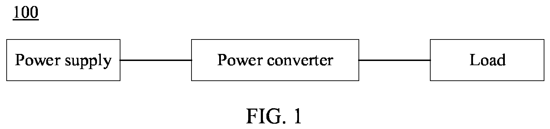

FIG. 1 is a diagram of an application scenario according to an embodiment of this application.

As shown in FIG. 1, a power converter is a power conversion apparatus, is connected between a power supply and a load, and converts an output voltage of the power supply into a voltage required by the load.

The power converter may be used in any scenario in which voltage or current conversion needs to be performed. For example, a photovoltaic inverter in a photovoltaic power generation scenario converts a voltage output by a photovoltaic power generation system into a voltage that meets a requirement of an alternating current power grid. For another example, an isolated regulated power supply in a network and internet technology (internet technology, IT) product converts a power supply voltage of an equipment room into a voltage required by a load (for example, a board, a fan, or a chip).

The power supply in this application is configured to output electric energy, and may be a conventional generator, or may be a new energy power supply. For example, the power supply may include a solar photovoltaic panel, a wind turbine, or the like. In addition, the electric energy output by the power supply may be an alternating current, or may be a direct current. This is not limited in this application.

The load in this application is configured to consume electric energy, and may be an alternating current load or a direct current load. This is not limited in this application.

It should be understood that some devices in this application may have both a power supply function and a load function.

For example, in a photovoltaic scenario, an energy storage device may be used as a load to store electric energy output by the photovoltaic power generation system, or may be used as a power supply to output electric energy to another load.

In this application, the power converter is configured to convert electric energy between different devices. The power converter may include one or more of a direct current/direct current converter, a direct current/alternating current converter, an alternating current/direct current converter, and a bidirectional converter. It should be understood that all devices that can implement a power conversion function may be considered as the power converter in this application.

For example, if the power supply generates a direct current, the load needs to use an alternating current, and the energy storage device supports the direct current, the power converter may convert the direct current of the power supply into an alternating current and transmit the alternating current to the load, and convert the direct current of the power supply into direct currents of different specifications and transmit the direct currents to the energy storage device.

Currently, to reduce energy consumption of the power converter, an LLC resonance circuit is generally introduced into a power conversion circuit of the power converter in the industry. The LLC resonance circuit may implement a zero voltage switch (zero voltage switch, ZVS) of a primary-side switching transistor and a zero current switch (zero current switch, ZCS) of a secondary-side switching transistor of a transformer in the power conversion circuit, to reduce switching power consumption of the switching transistor.

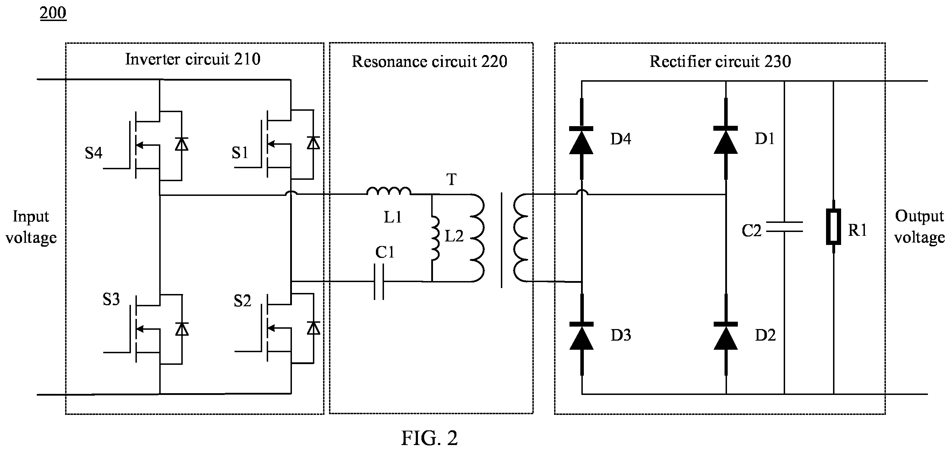

FIG. 2 is a schematic of a structure of a current full-bridge LLC power conversion circuit. The power conversion circuit includes an inverter circuit 210, a resonance circuit 220, and a rectifier circuit 230.

The inverter circuit 210 includes two groups of power switches, and each group of power switches includes two power switches connected in series. The resonance circuit 220 includes a resonance capacitor C1, a resonance inductor L1, an excitation inductor L2, and a transformer T. The resonance capacitor C1, the resonance inductor L1, and the excitation inductor L2 form an energy transmission network. The rectifier circuit 230 includes two groups of diodes, each group of diodes includes two diodes connected in series, and the rectifier circuit 230 further includes a filter capacitor C2 and an output resistor R1.

One end of the resonance capacitor C1 is connected to a series connection point of two power switches of one group of power switches, the other end of the resonance capacitor C1 is connected to one end of the excitation inductor L2 and one end of a primary winding of the transformer T, the other end of the excitation inductor L2 is connected to the other end of the primary winding of the transformer T and one end of the resonance inductor L1, and the other end of the resonance inductor L1 is connected to a series connection point of two power switches of the other group of power switches.

In the rectifier circuit 230, a series connection point of two diodes of one group of diodes is connected to one end of a secondary winding, a series connection point of two diodes of the other group of diodes is connected to the other end of the secondary winding, and the filter capacitor C2 and the output resistor R1 are connected in parallel to the two groups of diodes.

In this embodiment of this application, when the power conversion circuit operates, on-off states of S1 and S3 are the same, on-off states of S2 and S4 are the same, and the on-off states of S1 and S3 are opposite to the on-off states of S2 and S4.

For example, in a first time period, S2 and S4 are turned off, and S1 and S3 are turned on. In this case, S1, the energy transmission network, the primary winding of the transformer, and S3 form a loop, so that the rectifier circuit 230 outputs a voltage.

In a second time period, S2 and S4 are turned on, and S1 and S3 are turned off. In this case, S2, the energy transmission network, the primary winding of the transformer, and S4 form a loop, so that the rectifier circuit 230 outputs a voltage.

The full-bridge LLC power conversion circuit may control a switching frequency of a switching transistor to adjust an output voltage. Specifically, a voltage gain (Gain) changes with the switching frequency f in the power conversion circuit, and the voltage gain (Gain) means a ratio of the output voltage to an input voltage. When the switching frequency of the switching transistor is lower than a resonance frequency of the LLC resonance circuit, an absolute value of ΔGain/Δf gradually increases with a decrease in the switching frequency, and an increasing speed is increasingly fast; or when the switching frequency is higher than a resonance frequency, an absolute value of ΔGain/Δf gradually decreases with an increase in the switching frequency, and the absolute value of ΔGain/Δf tends to be stable. Therefore, if the input voltage remains unchanged and Δf is in a linear relationship with time, in a same time period, a voltage variation amount at a low switching frequency is greater than a voltage variation amount at a high switching frequency, resulting in non-linearity between the output voltage and time. As a result, when the switching frequency is high, this may cause a rapid increase or decrease in the output voltage, and a large ripple is generated; or when the switching frequency is low, this may cause a slow change in the output voltage, and the change in the output voltage exceeds designed response time.

Based on the foregoing reasons, this application provides a power conversion apparatus, to help improve linearity between an output voltage and time during switching of a switching frequency, and improve performance of a power converter.

It should be understood that the power conversion circuit in FIG. 2 is merely an example for ease of description. An actual power conversion circuit may have another topology. This is not limited herein.

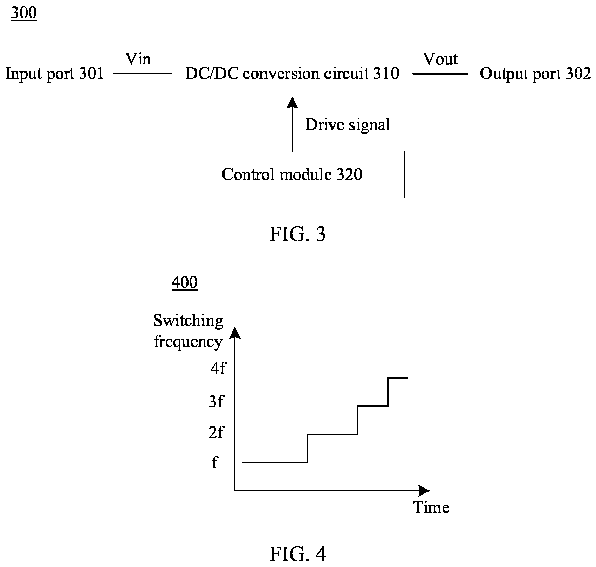

FIG. 3 is a diagram of a structure of a first power conversion apparatus according to an embodiment of this application. As shown in FIG. 3, the apparatus 300 includes an input port 301, an output port 302, a power conversion circuit 310, and a control module 320. The input port 301 is configured to receive an input voltage Vin from a power supply (for example, the power supply shown in FIG. 1, or another power supply). The power conversion circuit 310 is configured to perform power conversion on the input voltage Vin to obtain an output voltage Vout. The power conversion circuit includes an inverter circuit, a resonance unit, and a rectifier circuit. The inverter circuit includes a plurality of bridge arms, and each bridge arm includes a plurality of switching transistors. The output port 302 is configured to output Vout to supply power to a load (for example, the load shown in FIG. 1). The inverter circuit is configured to operate at a switching frequency by using the plurality of switching transistors, so that a direct current input to a DC/DC conversion circuit is converted into an alternating current. The resonance unit is configured to perform voltage conversion on the alternating current converted by the inverter circuit. The rectifier circuit is configured to convert the alternating current on which the resonance unit performs the voltage conversion into a direct current. The control module 320 is configured to: after controlling the plurality of switching transistors to operate for first duration by using a first frequency as the switching frequency, control the switching frequency to switch to a second frequency; and control the plurality of switching transistors to operate for second duration by using the second frequency as the switching frequency. If the first frequency is higher than the second frequency, the first duration is shorter than the second duration; or if the first frequency is lower than the second frequency, the first duration is longer than the second duration.

In a scenario of switching of a switching transistor frequency, the control module 320 sends a drive signal to the power conversion circuit 310 in target action duration only after duration in which the switching transistor operates by using a current frequency as the switching frequency meets current action duration, to control the switching transistor to operate by using the current frequency as the switching frequency. The current action duration is determined based on the current frequency, and the target action duration is determined based on a target frequency.

Specifically, it is assumed that the current frequency is the first frequency, the target frequency is the second frequency, the current action duration is the first duration, and the target action duration is the second duration. The switching transistor currently operates at the first frequency, and the control module 320 switches an operating frequency of the switching transistor from the first frequency to the second frequency based on a frequency adjustment signal, where the frequency adjustment signal includes the second frequency. If duration in which the switching transistor operates at the first frequency meets the first duration, the control module 320 outputs a drive signal to control the switching transistor to operate at the second frequency, where duration in which the second frequency acts on the switching transistor is the second duration; or if duration in which the switching transistor operates at the first frequency is short than the first duration, the control module controls the switching transistor to continue operating at the first frequency until operating duration meets the first duration, and then outputs a drive signal to control the switching transistor to operate at the second frequency, where duration in which the second frequency acts on the switching transistor is the second duration.

In a possible implementation, the frequency adjustment signal is generated by another component outside the control module and is sent to the control module. Specifically, the component outside the control module generates the frequency adjustment signal based on a parameter of the power conversion circuit. For example, the parameter of the power conversion circuit may include at least one of the following: an input current of the power conversion circuit, an input voltage of the power conversion circuit, an output current of the power conversion circuit, and an output voltage of the power conversion circuit.

In a possible implementation, the frequency adjustment signal is generated in the control module. Specifically, the control module includes a detection unit, the detection unit detects a parameter of the power conversion circuit, and the control module generates the frequency adjustment signal based on the parameter of the power conversion circuit. For example, the parameter of the power conversion circuit may include at least one of the following: an input current of the power conversion circuit, an input voltage of the power conversion circuit, an output current of the power conversion circuit, and an output voltage of the power conversion circuit.

It should be understood that for example the current frequency is set to be the first frequency, the target frequency is set to be the second frequency, the current action duration is set to be the first duration, and the target action duration is set to be the second duration. Alternatively, the current frequency may be set to be the second frequency, the target frequency may be set to be the first frequency, the current action duration may be set to be the second duration, and the target action duration may be set to be the first duration. This is not limited in this application.

In a possible implementation, FIG. 4 is a diagram of a relationship between a frequency and time according to an embodiment of this application. A higher switching frequency indicates shorter time in which the switching frequency operates. In this embodiment of this application, if the first frequency is higher than the second frequency, duration in which the switching transistor operates at the first frequency is shorter than duration in which the switching transistor operates at the second frequency.

In the apparatus disclosed in this application, the control module controls, based on the drive signal, operating time of the switching transistor at different switching frequencies in the power conversion circuit, so that the switching transistor operates for short time at a high switching frequency, and operates for long time at a low switching frequency. This reduces a variation amount of the output voltage at the high switching frequency, increases a variation amount of the output voltage at the low switching frequency, improves linearity of the output voltage, and improves stability of the power conversion apparatus.

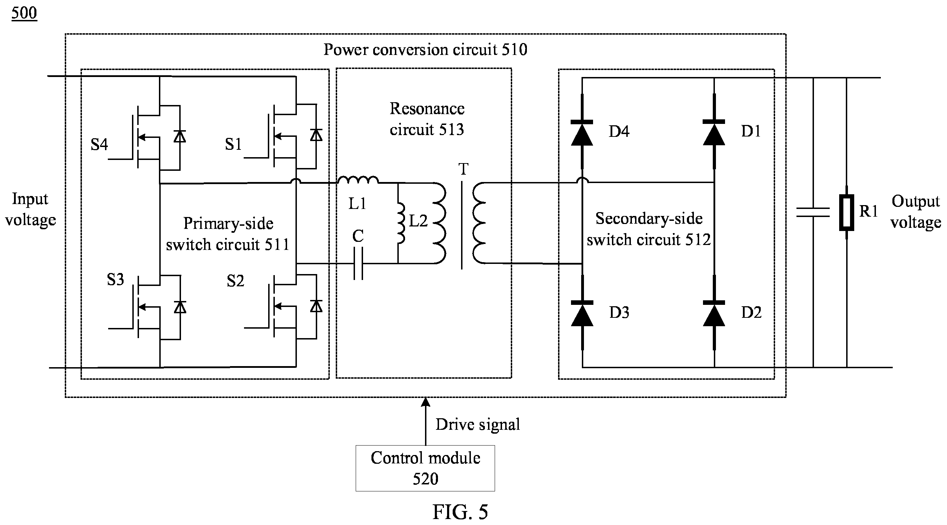

FIG. 5 is a diagram of a structure of a second power conversion apparatus according to an embodiment of this application. Compared with the apparatus 300, the apparatus shown in FIG. 5 shows examples of a specific power conversion circuit and a specific control module.

It should be understood that for ease of description, in this embodiment of this application, descriptions are provided by using an example in which the power conversion apparatus is a direct current/direct current converter (DC/DC converter). The power conversion apparatus may alternatively be another device including a DC/DC conversion circuit, for example, an inverter including the DC/DC conversion circuit. A direct current is boosted or bucked by using the DC/DC conversion circuit, and then is input to an input end of the DC/AC conversion circuit in the inverter.

As shown in FIG. 5, the power conversion circuit 510 includes a primary-side switch circuit 511, a secondary-side switch circuit 512, and a resonance circuit 513. The primary-side switch circuit 511 is configured to convert a direct current input voltage Vin into an alternating current voltage, the resonance circuit 513 is configured to: receive the alternating current voltage and couple electric energy from a primary side of a transformer in the resonance circuit 513 to a secondary side of the transformer, and the secondary-side switch circuit 512 is configured to convert the alternating current voltage coupled to the secondary side of the transformer into a direct current output voltage Vout.

Optionally, the primary-side switch circuit 511 includes primary-side switching transistors S1, S2, S3, and S4, where S1 and S3 are connected in series, and S2 and S4 are connected in series; and the secondary-side switch circuit 512 includes secondary-side diodes D1, D2, D3, and D4, where D1 and D3 are connected in series, and D2 and D4 are connected in series. A drive signal is specifically used to control turn-on or turn-off of the primary-side switching transistors S1, S2, S3, and S4. For specific descriptions of the primary-side switch circuit 511 and the secondary-side switch circuit 512, refer to the inverter circuit and the rectifier circuit in FIG. 2. Details are not described herein again.

It should be understood that the primary-side switch circuit 511 including four switching transistors is merely an example. In application, more or fewer switching transistors may be included based on different actual application scenarios and requirements. This is not limited in this application.

The control module 520 is specifically configured to send a drive signal to the power conversion circuit 510 within target action duration, to control a switching frequency of the primary-side switching transistors S1, S2, S3, and S4 to switch from a current frequency to a target frequency, where the target action duration is determined based on the target frequency.

For example, the primary-side switching transistors S1, S2, S3, and S4 are MOSFET transistors. The drive signal cyclically provides a high level and a low level to the gate (gate electrode) of the MOSFET transistor to control turn-on or turn-off of the MOSFET transistor, and the switching frequency means a frequency at which the MOSFET transistor is turned on or turned off.

The control module 520 sends the drive signal to the power conversion circuit 510 only after duration in which the switching transistor operates by using the current frequency as the switching frequency meets specific duration.

For an action of the control module, refer to related descriptions in FIG. 4. Details are not described herein again.

Optionally, the control module includes at least one of a DSP, a CPLD, an FPGA, a CPU, or an MCU.

In the apparatus disclosed in this application, the control module controls, based on the drive signal, operating time of the switching transistor at different switching frequencies in the power conversion circuit, so that the switching transistor operates for short time at a high switching frequency, and operates for long time at a low switching frequency. This reduces a variation amount of the output voltage at the high switching frequency, increases a variation amount of the output voltage at the low switching frequency, improves linearity of the output voltage, and improves stability of the power conversion apparatus.

In this application, the control module may determine, based on the switching frequency of the switching transistor, duration in which the switching frequency acts on the switching transistor. The following provides explanations with reference to a structure of the control module. For ease of description, it is assumed that the current frequency of the switching transistor is the first frequency, duration corresponding to the first frequency is the first duration, the target frequency to which the switching transistor needs to switch is the second frequency, and duration corresponding to the second frequency is the second duration.

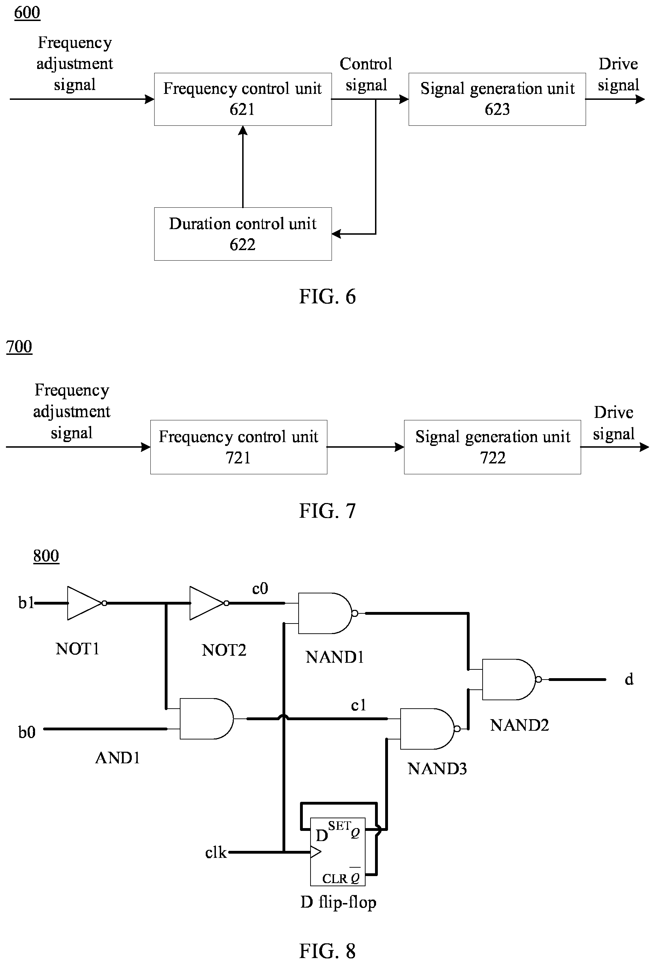

FIG. 6 is a diagram of a structure of the control module according to an embodiment of this application. As shown in FIG. 6, the control module includes a frequency control unit 621, a duration control unit 622, and a signal generation unit 623. The frequency control unit 621 receives a frequency adjustment signal, where the frequency adjustment signal indicates to adjust the switching frequency of the switching transistor in the power conversion circuit from the first frequency to the second frequency, and the frequency control unit 621 generates a corresponding control signal based on the second frequency and sends the control signal to the duration control unit 622. The duration control unit 622 obtains action duration of the control signal based on the control signal and sends the action duration to the frequency control unit 621. The frequency control unit 621 continuously sends the control signal to the signal generation unit 623 within the action duration. The signal generation unit 623 generates a drive signal based on the control signal to control the switching transistor in the power conversion circuit. Duration in which the frequency control unit 621 sends the control signal to the signal generation unit 623 is equal to action duration that is of the control signal and that is generated by the duration control unit 622 based on the control signal. Only in time of receiving the control signal, the signal generation unit 623 generates a corresponding control signal to control the switching transistor in the power conversion circuit.

In this embodiment of this application, the frequency control unit may generate a corresponding control signal according to the received frequency adjustment signal. For example, the frequency control unit may include an encoder, and the control signal includes a control code. The encoder may compile a frequency indicated in the frequency adjustment signal into the control code. The control code may be a binary code, and the binary code may be represented by a level, where a high level corresponds to 1, and a low level corresponds to 0.

It should be understood that the encoder is merely an example of the frequency control unit, the frequency control unit may further include another device that can generate a control signal, and the control signal may also include other representation forms in addition to the control code.

The frequency control unit 621 sends the control signal to the signal generation unit 623 in the second duration only after determining that duration in which the switching transistor operates by using the first frequency as the switching frequency meets the first duration, where the first duration is determined based on the first frequency.

In a possible implementation, if the first frequency is higher than the second frequency, the first duration is shorter than the second duration; or if the first frequency is lower than the second frequency, the first duration is longer than the second duration.

In this application, there is a correspondence between a control signal and a frequency. It should be understood that a specific form of the control signal is not limited in this application. The control signal may be a control code, or may be indication information. For ease of description, the control code is used as an example for description in this application.

For example, the control code is 11, and a frequency corresponding to the control code may be 50 Hz. A rule that the correspondence meets and how to specifically configure the correspondence can be implemented by a person skilled in the art. This is not limited herein.

In this application, the signal generation unit 623 may generate the drive signal based on the control code, and control the switching frequency of the switching transistor in the power conversion circuit by using the drive signal. For example, the signal generation unit may be a variable oscillator, including a voltage-controlled oscillator (voltage-controlled oscillator, VCO) and/or a digitally controlled oscillator (digitally controlled oscillator, DCO).

It should be understood that a source of the frequency adjustment signal is not limited in this embodiment of this application. For example, the frequency adjustment signal may be preset by a processing unit through theoretical calculation, or may be generated after a processing unit detects the output voltage of the power conversion circuit. The processing unit may be an internal unit included in the power conversion apparatus, or may be an external unit independent of the power conversion apparatus.

The control module disclosed in this application controls, based on the drive signal, operating time of the switching transistor at different switching frequencies in the power conversion circuit, so that the switching transistor operates for short time at a high switching frequency, and operates for long time at a low switching frequency. This reduces a variation amount of the output voltage at the high switching frequency, increases a variation amount of the output voltage at the low switching frequency, improves linearity of the output voltage, and improves stability of the power conversion apparatus.

It should be understood that FIG. 6 shows only an example of the control module. The control module in this application may be alternatively implemented in another manner. FIG. 7 is a diagram of a structure of the control module according to an embodiment of this application. As shown in FIG. 7, the control module includes a frequency control unit 721 and a signal generation unit 722. The frequency control unit 721 receives a frequency adjustment signal, where the frequency adjustment signal indicates to adjust the switching frequency of the switching transistor in the power conversion circuit from the first frequency to the second frequency. The frequency control unit 721 generates a corresponding control signal based on the frequency adjustment signal, and sends the control signal to the signal generation unit 722, where the control signal indicates the signal generation unit to switch the switching frequency from the first frequency to the second frequency. The signal generation unit obtains the second duration based on the control signal, and outputs the drive signal to the switching transistor in the second duration, so that the switching transistor operates at the second frequency.

In a possible implementation, the signal generation unit includes the duration control unit and the variable oscillator in FIG. 6. After obtaining the second duration, the duration control unit outputs the second duration to the variable oscillator to output the drive signal.

In a possible implementation, the signal generation unit stores a correspondence between a control code and duration, the signal generation unit directly determines second duration corresponding to a second control code based on the correspondence, the signal generation unit includes a timer, the timer is started when the timer controls the switching frequency of the plurality of switching transistors to switch from the first frequency to the second frequency, and the signal generation unit controls the switching frequency of the plurality of switching transistors to switch to another frequency when duration of the timer is the second duration.

For example, the signal generation unit includes a chip, and the chip stores the correspondence between the control code and the duration.

In this application, the duration control unit may determine, based on the control code, action duration of a frequency corresponding to the control code. An implementation of the duration control unit is not fixed. One of the possible implementations is used in the following for description in this application.

FIG. 8 is a diagram of a structure of a digital circuit of the duration control unit according to an embodiment of this application.

As shown in FIG. 8, the diagram of the structure of the digital circuit provided in this embodiment of this application includes two NOT gates (NOT1 and NOT2), one AND gate (AND1), three NAND gates (NAND1, NAND2, and NAND3), and one D flip-flop. Values of b0, b1, c0, c1, and d are 0 or 1, where 0 indicates a low level, and 1 indicates a high level.

In this application, an input end of NOT1 is b1, an output end of NOT1 is an input end of NOT2, the output end of NOT1 and b0 are input ends of AND 1, an output end of NOT2 is c0, an output end of AND1 is c1, input ends of NAND1 are c0 and a clock signal clk, input ends of NAND3 is c1 and a Q end of the D flip-flop, input ends of NAND2 is an output end of NAND1 and an output end of NAND3, an output end of NAND2 is d, the clock signal clk is accessed by the D flip-flop, and a D end of the D flip-flop is connected to a Q end of the D flip-flop, where d is a signal output by the duration control unit to the frequency control unit.

In this application, b0b1 represents a control code, and a frequency corresponding to the control code increases with an increase in a value of a binary number b0b1 represented by the control code.

It should be noted that FIG. 8 shows only a topology structure of the digital circuit. A specific implementation of the digital circuit may be a corresponding analog circuit, or may be implemented by using software. This is not limited in this application.

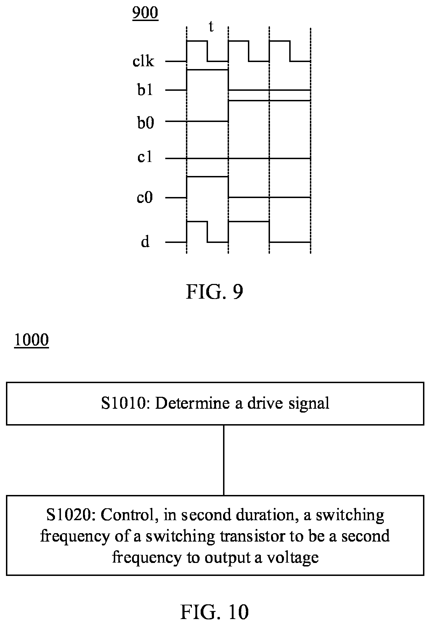

For ease of description, in this application, an example in which b1b0 changes from 10 to 01 is used to describe an operating procedure of the duration control unit. FIG. 9 is a sequence diagram of the duration control unit according to an embodiment of this application.

It is assumed that a cycle of the clock clk in FIG. 9 is t. When b1b0 is 10, b1 is 1, c0 is always 1, and c1 is always 0. If the clock clk is high, the output d is 1. If the clock clk is low, the output d changes to 0. When b1b0 changes from 10 to 01, b1 changes to 0, c0 is always 0, b0 is 0, and c1 is always 0. When the clock clk is high, a Q value of the D flip-flop changes, and a value of d changes. When the clock clk is low, a Q value of the D flip-flop does not change, and d does not change. It should be understood that the Q value of the D flip-flop changes only on a rising edge of the clock clk. Therefore, the Q value of the D flip-flop changes only once in a clock cycle.

It can be learned from FIG. 9 that when b1b0 is 10, duration in which d outputs a high level to the frequency control unit in a cycle is t/2; or when b1b0 is 01, duration in which d outputs a high level to the frequency control unit in a cycle is t, so that frequency action duration corresponding to the control code 01 is longer than frequency action duration 10 corresponding to the control code 01. A frequency corresponding to the control code 01 is lower than a frequency corresponding to the control code 01. Therefore, the switching transistor can operate for short time at a high switching frequency, and can operate for long time at a low switching frequency. This reduces a variation amount of the output voltage at the high switching frequency, increases a variation amount of the output voltage at the low switching frequency, improves linearity of the output voltage, and improves stability of the power conversion apparatus.

It should be noted that if the frequency control unit receives the frequency adjustment signal in the middle of a cycle of d, a current cycle is completed before a cycle corresponding to the changed frequency is executed.

It should be noted that the two-bit control code listed in this embodiment of this application is merely an example, and the control code may alternatively have a plurality of bits. If the structure in this embodiment is used, correspondingly, a quantity of bits of c continues to be increased, and a quantity of D flip-flops is increased. The quantity of D flip-flops should be equal to the quantity of bits of the control code minus 1, and a ratio of a frequency cycle or frequency action duration is 2ⁿ⁻¹ or 1/2ⁿ⁻¹.

It should be noted that in this application, setting a positive correlation between a binary value of a control code and a frequency is merely an example. Actually, a correspondence between a control code and a frequency may be set according to a requirement. In this application, time in which the switching frequency operates may be set based on the switching frequency, to improve use flexibility of the power conversion apparatus.

FIG. 10 shows a power conversion method according to an embodiment of this application. The method is performed by a power conversion apparatus. The power conversion apparatus includes a power conversion circuit, and the power conversion circuit includes a switching transistor.

S1010: Determine a drive signal, where the drive signal is used to control a switching frequency of the switching transistor to switch from a first frequency to a second frequency.

Specifically, a control module obtains a frequency adjustment signal, where the frequency adjustment signal indicates to adjust the switching frequency of the switching transistor in the power conversion circuit from the first frequency to the second frequency, and the control module generates the drive signal based on the second frequency.

In a possible implementation, a drive signal is preset on the power conversion apparatus.

In a possible implementation, the power conversion apparatus obtains a drive signal from another external apparatus.

In a possible implementation, the power conversion apparatus includes a control module, and the control module generates a drive signal based on the second frequency. A manner in which the control module obtains the second frequency is not limited.

S1020: Control, in second duration, the switching frequency of the switching transistor in the power conversion circuit to be the second frequency to output a voltage, where the second duration is determined based on the second frequency.

In a possible implementation, the power conversion apparatus includes a control module. The control module sends the drive signal to the power conversion circuit only after determining that duration in which the switching transistor operates by using the first frequency as the switching frequency meets first duration, where the first duration is determined based on the first frequency.

In a possible implementation, if the first frequency is higher than the second frequency, the first duration is shorter than the second duration; or if the first frequency is lower than the second frequency, the first duration is longer than the second duration.

According to the power conversion method disclosed in this application, operating time of the switching transistor at different switching frequencies in the power conversion circuit is controlled based on the drive signal, so that the switching transistor operates for short time at a high switching frequency, and operates for long time at a low switching frequency. This reduces a variation amount of the output voltage at the high switching frequency, increases a variation amount of the output voltage at the low switching frequency, improves linearity of the output voltage, and improves stability of the power conversion apparatus.

An embodiment of this application further provides a power supply device, including a housing, a circuit board disposed in the housing, and a power conversion apparatus disposed on the circuit board. The power conversion apparatus may include any one of the power conversion apparatuses in the foregoing embodiments. Optionally, the power supply device may further include an input terminal, an output terminal, and a cooling system (for example, a fan). The input terminal may be connected to an input port of the power conversion apparatus, and is configured to receive electric energy from a power supply; the output terminal may be connected to an output port of the power conversion apparatus, and is configured to transfer converted electric energy to a load, to supply power to the load; and the cooling system is configured to: cool the entire apparatus, and ensure normal operating of each module (or component).

The power supply device provided in this application may be used in any wide-range voltage conversion scenario, may be configured to stably supply power to a product such as a network or a server, and may stably supply power to a device such as a wireless product power supply, a photovoltaic power supply, or a site power supply.

In embodiments provided in this application, the disclosed systems, apparatuses, and methods may be implemented in other manners. The described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. The technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power conversion apparatus, comprising a DC/DC conversion circuit and a control module, wherein;
the DC/DC conversion circuit comprises an inverter circuit, a resonance unit, and a rectifier circuit, the inverter circuit comprises a plurality of bridge arms, each bridge arm comprises a plurality of switching transistors, the inverter circuit is configured to operate at a switching frequency by using the plurality of switching transistors, so that a direct current input to the DC/DC conversion circuit is converted into an alternating current, the resonance unit is configured to perform voltage conversion on the alternating current converted by the inverter circuit, and the rectifier circuit is configured to convert the alternating current on which the resonance unit performs the voltage conversion into a direct current; and
the control module is configured to:
after controlling the plurality of switching transistors to operate for first duration by using a first frequency as the switching frequency, control the switching frequency to switch to a second frequency; and
control the plurality of switching transistors to operate for second duration by using the second frequency as the switching frequency, wherein
the first frequency is higher than the second frequency, and the first duration is shorter than the second duration.

2. The apparatus according to claim 1, wherein the control module comprises:
a frequency control unit, a duration control unit, and a signal generation unit;
the frequency control unit is configured to send a second control code to the duration control unit, wherein the second control code indicates the second frequency;
the duration control unit is configured to: obtain the second duration based on the second control code, and output the second duration to the frequency control unit;
the frequency control unit is further configured to continuously output the second control code to the signal generation unit in the second duration; and
the signal generation unit is configured to: in response to the second control code, control a switching frequency of the plurality of switching transistors to switch from the first frequency to the second frequency, and enable the plurality of switching transistors to operate at the second frequency for the second duration.

3. The apparatus according to claim 1, wherein the control module comprises:
a frequency control unit and a signal generation unit;
the frequency control unit is configured to send a second control code to the signal generation unit, wherein the second control code indicates the second frequency; and
the signal generation unit is configured to: obtain the second duration based on the second control code, control a switching frequency of the plurality of switching transistors to switch from the first frequency to the second frequency, and enable the plurality of switching transistors to operate at the second frequency for the second duration.

4. The apparatus according to claim 2, wherein a quantity of bits of the second control code is two, and the duration control unit comprises:
a first NOT gate, a second NOT gate, an AND gate, a first NAND gate, a second NAND gate, a third NAND gate, and a flip-flop;
an input end of the first NOT gate inputs a first bit of the second control code, and an output end of the first NOT gate is connected to an input end of the second NOT gate and a first input end of the AND gate;
an output end of the second NOT gate is connected to a first input end of the first NAND gate;
a second input end of the first NAND gate is connected to a clock signal, and an output end of the first NAND gate is connected to a first input end of the second NAND gate;
a second input end of the AND gate inputs a second bit of the second control code, and an output end of the AND gate is connected to a first input end of the third NAND gate;
a second input end of the third NAND gate is connected to an output end of the flip-flop, and an output end of the third NAND gate is connected to a second input end of the second NAND gate;
an input end of the flip-flop inputs the clock signal; and
an output end of the second NAND gate is connected to the frequency control unit, and duration in which the second NAND gate outputs a high level in a cycle is the second duration.

5. The apparatus according to claim 3, wherein the signal generation unit determines, based on a correspondence between a control code and duration, that duration corresponding to the second control code is the second duration.

6. The apparatus according to claim 2 or 3, wherein the first duration is 1/2ⁿ⁻¹ of the second duration, and n is a quantity of bits of a control code output by the frequency control unit.

7. The apparatus according to claim 2, 3, or 6, wherein the control module comprises n-1 flip-flops, and n is the quantity of bits of the control code output by the frequency control unit.

8. The apparatus according to any one of claims 1 to 7, wherein the control module is further configured to:
receive a frequency adjustment signal, wherein the frequency adjustment signal comprises the second frequency; and
in response to the frequency adjustment signal, control the switching frequency to switch to the second frequency.

9. The apparatus according to any one of claims 1 to 7, wherein the control module is further configured to:
obtain a parameter of the DC/DC conversion circuit; and
determine the second frequency based on the electrical parameter.

10. The apparatus according to claim 9, wherein the parameter comprises at least one of the following:
an input current of the DC/DC conversion circuit, an input voltage of the DC/DC conversion circuit, an output current of the DC/DC conversion circuit, or an output voltage of the DC/DC conversion circuit.

11. A control module, configured to be electrically connected to a DC/DC conversion circuit, wherein the DC/DC conversion circuit comprises an inverter circuit, a resonance unit, and a rectifier circuit, the inverter circuit comprises a plurality of bridge arms, each bridge arm comprises a plurality of switching transistors, and the control module comprises:
a frequency control unit, a duration control unit, and a signal generation unit;
the frequency control unit is configured to output a second control code to the duration control unit and the signal generation unit after keeping outputting a first control code to the signal generation unit for first duration, wherein the first control code corresponds to a first frequency, and the second control code corresponds to a second frequency;
the duration control unit is configured to in response to the second control code, control duration in which the frequency control unit outputs the second control code to the signal generation unit to be second duration;
the signal generation unit is configured to: in response to the second control code, control a switching frequency of the switching transistor to switch from the first frequency to the second frequency, and enable the switching transistor to operate at the second frequency for the second duration; and
the first frequency is higher than the second frequency, and the first duration is shorter than the second duration.

12. The control module according to claim 11, wherein the first duration is 1/2ⁿ⁻¹ of the second duration, and n is a quantity of bits of a control code output by the frequency control unit.

13. The control module according to claim 11 or 12, wherein the duration control unit comprises n-1 flip-flops, and n is the quantity of bits of the control code output by the frequency control unit.

14. The control module according to any one of claims 11 to 13, wherein a quantity of bits of the second control code is two, and the duration control unit comprises:
a first NOT gate, a second NOT gate, an AND gate, a first NAND gate, a second NAND gate, a third NAND gate, and the flip-flop;
an input end of the first NOT gate inputs a first bit of the second control code, and an output end of the first NOT gate is connected to an input end of the second NOT gate and a first input end of the AND gate;
an output end of the second NOT gate is connected to a first input end of the first NAND gate;
a second input end of the first NAND gate is connected to a clock signal, and an output end of the first NAND gate is connected to a first input end of the second NAND gate;
a second input end of the AND gate inputs a second bit of the second control code, and an output end of the AND gate is connected to a first input end of the third NAND gate;
a second input end of the third NAND gate is connected to an output end of the flip-flop, and an output end of the third NAND gate is connected to a second input end of the second NAND gate;
an input end of the flip-flop inputs the clock signal; and
an output end of the second NAND gate is connected to the frequency control unit, and duration in which the second NAND gate outputs a high level in a cycle is the second duration.
